# EUROPEAN PATENT APPLICATION

(11) **EP 1 160 171 A2**
(43) Date of publication of application: **05.12.2001**
(21) Application number: 01304494.6
(22) Date of filing: 22.05.2001
(51) Int. Cl.: B65D 43/06

(54) **Container closure**

(30) Priority: 07.09.2000 GB 0021917; 26.05.2000 GB 0012758
(71) Applicant: Dolphin Packaging limited, Poole, Dorset BH15 3BT (GB)
(72) Inventor: Long, Steven Mark, Broadstone, Dorset BH18 9ND (GB)
(74) Representative: Lomas, Geoffrey Michael

(57) **Abstract**

A closure (3) for a container (1), the container having a mouth (16) surrounded by an external flange (7) extending generally away from the mouth, the closure comprising a closure body (9) adapted to extend across the mouth, a skirt (15) which is disposed below the level of the container flange when the closure is initially secured to the container and the mouth is uppermost, the skirt being connected to the margin of the body by a plurality of spaced-apart bridges (19) which lie adjacent to the outer margin of the flange in the initially secured condition of the closure, and a plurality of upwardly-facing latching formations (20) depending from the skirt (15) and each disposed circumferentially between adjacent bridges (19) as viewed in plan and adapted to latch under the flange (7), the upper portion (23) of the latching formations each lying vertically beneath a respective tool access aperture (25) provided in the margin of the closure body. The tool access apertures (25) enable the closure to be thermo-formed from sheet plastics material on a two-part tool assembly.

## Description

The present invention relates to container closures and particularly, but not exclusively, to tamper-evident closures for containers and to methods of forming such closures.

The invention stems from our desire to produce a tamper-evident (hereinafter referred to as 'te') closure that can be produced from sheet plastics material by a thermo-forming process rather than by an injection moulding process. The invention may, however, be applied to injection moulded closures if desired. The containers will usually be tubs for food products, but the invention may be applied to other containers. The invention may also be applied to so-called 'permanent' closures for containers.

According to one aspect of the invention we provide a closure for a container, the container having a mouth surrounded by an external flange extending generally away from the mouth, the closure comprising a closure body adapted to extend across the mouth, a skirt which is disposed below the level of the container flange when the closure is initially secured to the container and the mouth is uppermost, the skirt being connected to the margin of the body by a plurality of spaced-apart bridges which lie adjacent to the outer margin of the flange in the initially secured condition of the closure, and a plurality of upwardly-facing latching formations depending from the skirt and each disposed circumferentially between adjacent bridges as viewed in plan and adapted to latch under the flange, the upper portion of the latching formations each lying vertically beneath a respective tool access aperture provided in the margin of the closure body.

The tool access apertures may be completely open, but they may, at least prior to application of the closure to a container, be covered by flash.

In a first embodiment each latching formation comprises a latch wall supported on the skirt in an inclined position by a pair of substantially triangular fillets connected to opposite side edges of the latch wall, the latch wall being of substantially trapezoidal shape.

In a second embodiment each latching formation is defined by a pair of triangular latch walls having a common edge which is inclined inwardly and upwardly of the closure.

When the closure has been produced from a flat sheet of plastics material by thermo-forming, said upper portion of the latching formations has preferably been formed from the material that occupied the tool access apertures in the sheet material.

According to a second aspect of the invention we provide a method of forming a latch formation during thermo-forming of a closure in accordance with the first aspect of the invention, comprising creating a tool access aperture in the margin of the closure body, and causing a tool projection to extend axially through the tool access aperture in the direction normal to the plane of the closure body, the tool projection being shaped to assist in deforming the sheet material to provide an inclined latching formation, and relatively separating the tool projection and closure body by relative axial movement apart.

It will be appreciated that in the absence of the tool access apertures, a tool for forming the upper portion of the inclined latching formation would need to be provided with retractable tool parts to facilitate relative separation of the formed closure body and tool, which of course leads to substantially increased costs. The present invention can enable thermo-forming to be carried out in a two-part tool assembly using matched tools.

The tool projection preferably comprises a narrow shoulder which provides a forming surface to define the upper margin of the upper portion of the latch formation in the closed condition of the tools, and the tool shoulder is preferably bounded by a cutting edge of the tool projection that creates the respective tool access aperture.

In order to provide a cutting action the other tool of the tool assembly is preferably provided with a complementary cutting edge to that of said cutting edge.

The inclined walls of the latching formation may be thermo-formed from sheet material between complementary tool formations on a two-part tool assembly, or said walls may be formed by the action of differential pressure acting against a tool surface on just one of the tool parts.

The central portion of the closure body is preferably shaped to have a plug-fit with the container, and the closure body is detachably connected to the skirt by frangible connections which have to be broken on or prior to initial removal of the closure body from the container.

The frangible connections are preferably defined by a plurality of slits which are positioned in the margin of the closure body between the tool access apertures, and the tool access apertures are preferably of substantially trapezoidal shape as viewed in plan, the slits extending substantially lengthwise of said margin.

In one embodiment the skirt is provided with a pull-tab and with a weakened region adjacent to the pull-tab, to enable the skirt to be broken on firm pulling of the pull-tab, and then the skirt and bridges can be peeled away from the container, the peeling action breaking the frangible connections in the margin of the closure body. Once the skirt has been removed, it is then evident that the closure has been subject to attention.

In a second embodiment the skirt remains on the container after initial opening of the closure, this being facilitated, for example, by provided a pull-tab which is fast with the central portion of the closure body, and the skirt is left substantially intact.

Various container and tamper-evident closure assemblies in accordance with the invention will now be described, by way of example only, with reference to the accompanying drawings, in which:
**Figure 1** is a perspective view of a first container and closure assembly prior to initial opening of the closure,
**Figure 2** is an enlargement of the portion 2 of Figure 1,
**Figure 3** is a front elevation of the unopened assembly of Figure 1,
**Figure 4** is a plan view of the unopened assembly of Figure 1,
**Figure 5** is a computer simulation of the assembly corresponding to the view of Figure 1, and in which the container is of darker material than the closure,
**Figure 6** is a vertical section on the line 6-6 of Figure 4,
**Figure 7** is a vertical section of the line 7-7 of Figure 4, a forming tool projection being indicated in the upper part of the drawing,
**Figure 8** is a perspective view of a second container and closure assembly prior to initial opening of the closure,
**Figure 9** is a front elevation of the second container and closure assembly of Figure 8,
**Figure 10** is a plan view of the second container and closure assembly of Figure 8,
**Figure 11** is a side view of the second container and closure assembly of Figure 8,
**Figure 12** is an enlarged cross-section on the line 12-12 of Figure 10,
**Figure 13** is an enlarged cross-section on the line 13-13 of Figure 10,
**Figure 14** is a CAD perspective view of the upper tool of a two-part tool set for thermo-forming the lid of Figures 8 to 13,

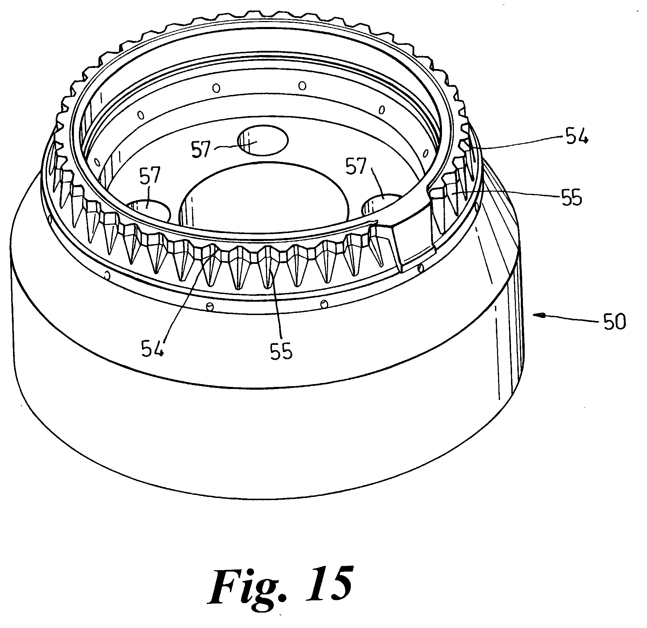

**Figure 15** is a CAD perspective view of the lower tool of the two-part tool set which comprises the upper tool of Figure 14,
**Figure 16** is a CAD enlargement of part of the view of Figure 14, boundary lines having been inserted to show the transition between one surface shape and a different surface shape,

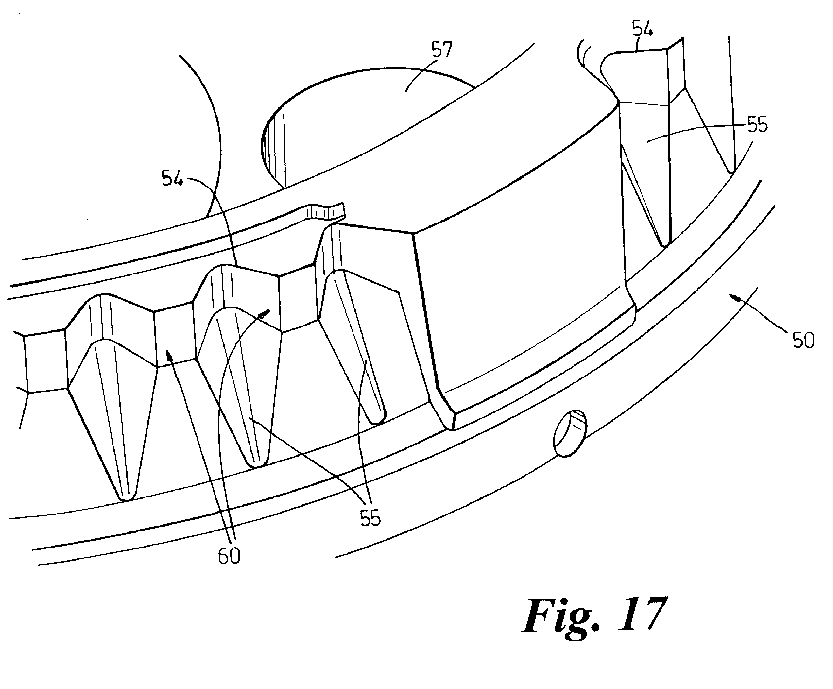

**Figure 17** is a CAD enlargement of part of the view of Figure 15,
**Figures 18 and 19** are perspective views from different directions of a modified closure to that shown in Figures 8 to 13 and suitable for use with the second container, and
**Figure 20** is a plan view of the closure of Figures 18 and 19.

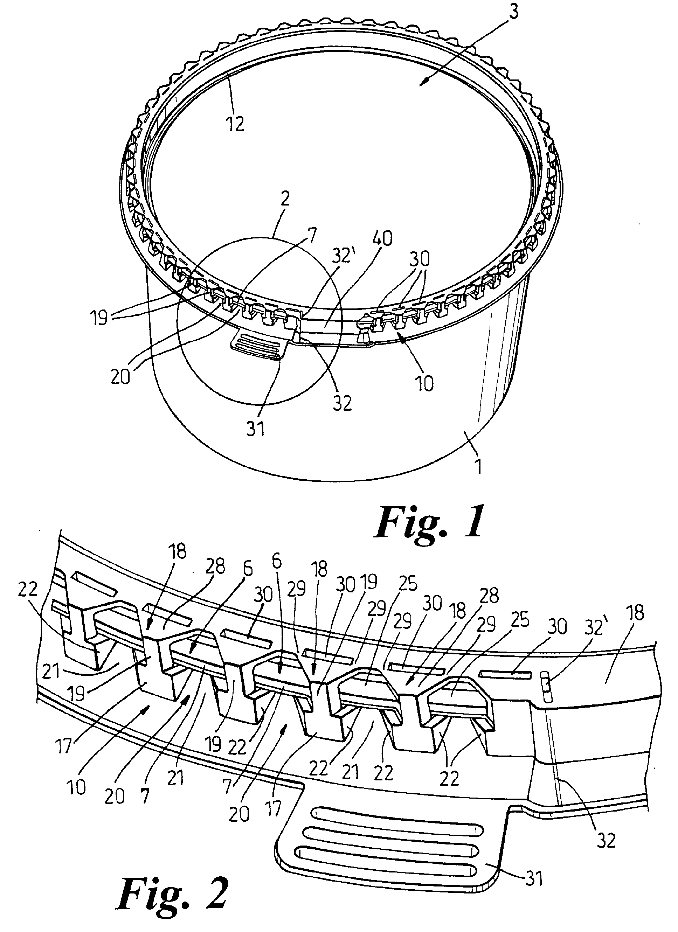

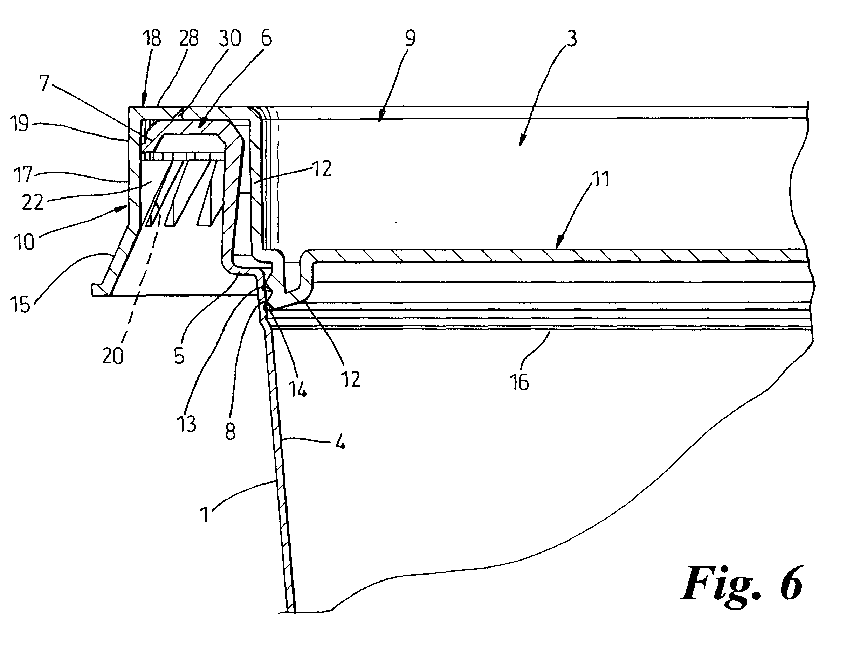

With reference to Figures 1 and 6, a thermo-formed plastics container is in the form of a tub 1 sealably closed by a tamper-evident closure in the form of a circular thermo-formed lid 3.

The shape of the tub is substantially conventional which highlights an advantageous feature of the invention, that the inventive closure can be used with this well-known type of tub. The tub 1 comprises a sloping sidewall 4 connected by annular step 5 with a hook-shaped (in transverse cross-section) rim 6 which terminates in a downwardly and outwardly directed flange or lip 7, the sidewall 4 in its upper region being expanded in this example to provide an annular sealing land 8.

The lid 3 comprises a closure body 9 of shallow cup shape and a downwardly directed skirt 10, the circular base 11 of the closure body being connected to the vertical wall 12 of the body 9 by means of a substantially U-shaped corner 12 provided with two vertically-spaced apart sealing ribs 13, 14 which effect a liquid tight seal with the sealing land 8, in known manner.

The lower portion 14 of skirt 10 is flared downwardly and outwardly, that is, away from the mouth 16 of the tub, defined essentially by the encircling land 8, whereas the upper portions of skirt 10 are substantially vertical wall elements 17 of oblong-shape connected to the radially outer margin 18 of closure body 12 by respective vertical bridges 19.

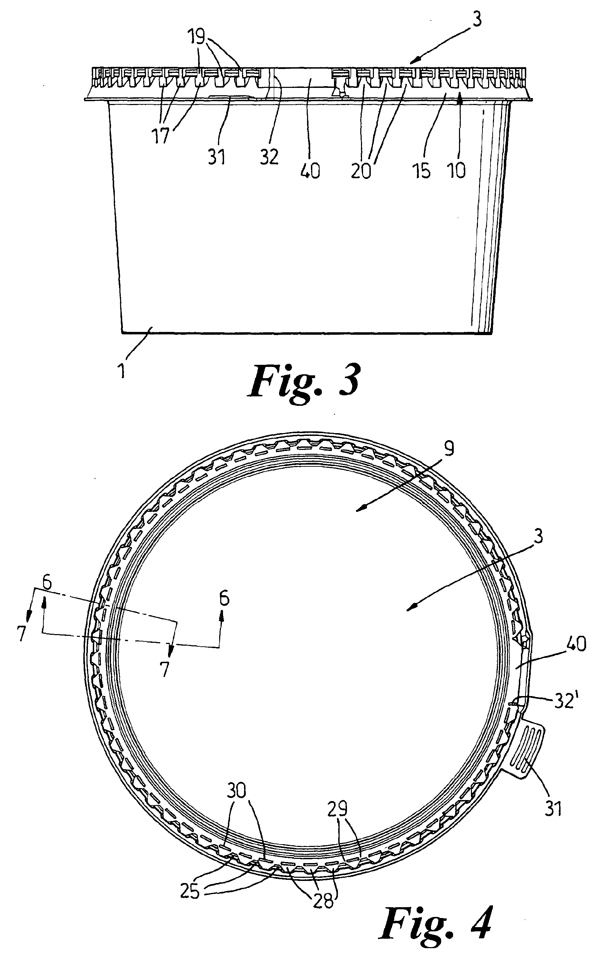

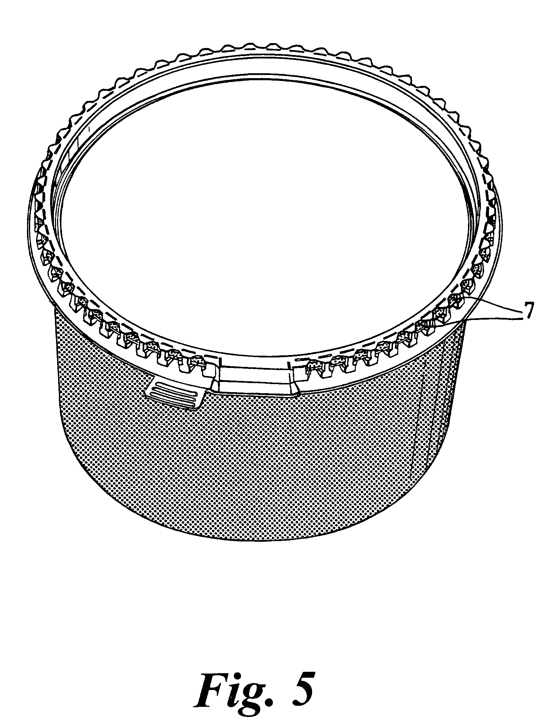

As best shown in Figures 2, 5 and 7 a plurality of latch formations 20 are each located substantially circumferentially, as viewed in plan, between respective adjacent pairs of bridges 19 and are supported by the skirt 10.

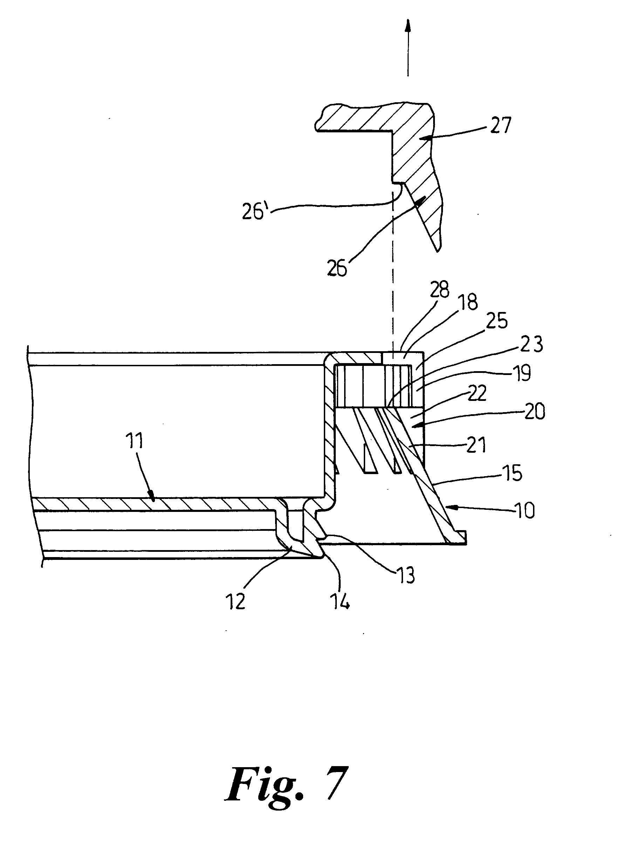

The latch formations 20 have been thermo-formed from the embryo sheet material of the lid, as will be described later. Each latch formation 20 comprises an inclined latch wall 21 of substantially symmetrical trapezoidal shape and a pair of triangular fillets 22 which interconnect opposite side edges of the latch wall 21 with the respectively adjacent pairs of vertical wall elements 17, each latch wall 21 being directed upwardly and inwardly with respect to the closure body 9, so as to define a horizontal latch abutment 23, Figure 7, which is positioned radially inwards relative to bridges 19 for latching engagement under the lip 7 of the tub rim 6.

The latch abutment 23 is provided by the narrow upper edge of the latch wall 21.

The margin 18 of the formed closure body 9 is cut-away by a series of circumferentially-spaced apart tool access apertures 25 of symmetrical trapezoidal shape, the apertures 25 extending between bridges 19 and in plan view being in register with the upper portions of the respective latch formations 20, to enable a sloping nose 26 and abutment-forming shoulder 26', Figure 7, of an upper thermo-forming tool 27 to be retracted axially upwardly of the lid following forming, through the apertures 25, the nose 26 having assisted in shaping the walls 21, 22, and the shoulder 26' having assisted in shaping of the latch abutment 23.

It will be seen that the apertures 25 leave the margin 18 of the closure body 9 as a series of trapezoidal radial projections, and each of these projections 28 is connected to the remainder of the closure body 9 by a pair of frangible connecting limbs 29 defined in part by the opposite ends of a series of circumferentially-extending slits 30.

A first pull-tab 31 on the skirt 10 enables the skirt 10 with depending latch formations 20, bridges 19 and projections 28 to be separated from the main portion of closure body 9 by a firm pull exerted on tab 31, break line 32 in skirt 10 and break line 32' in margin 18 enabling initial separation of the skirt 10.

After removal of the skirt 10 and depending members, the main part of closure body 3 can be removed from the tub by pulling upwards on a second tab 40, and the tub can be re-sealed by reapplication of the closure body 3 to the tub, sealing being effected by ribs 13, 14.

It will be appreciated that the lid 3 can be thermo-formed from sheet plastics material. The tools may be designed to produce the cut-outs 25 in one closure of the tools, or the cut-outs 25 may be produced during a pre-forming operation. It is preferred, however, that the cut-outs 25 are produced during one closure of the tools, and that all of the cut material is utilised in forming the latch formation.

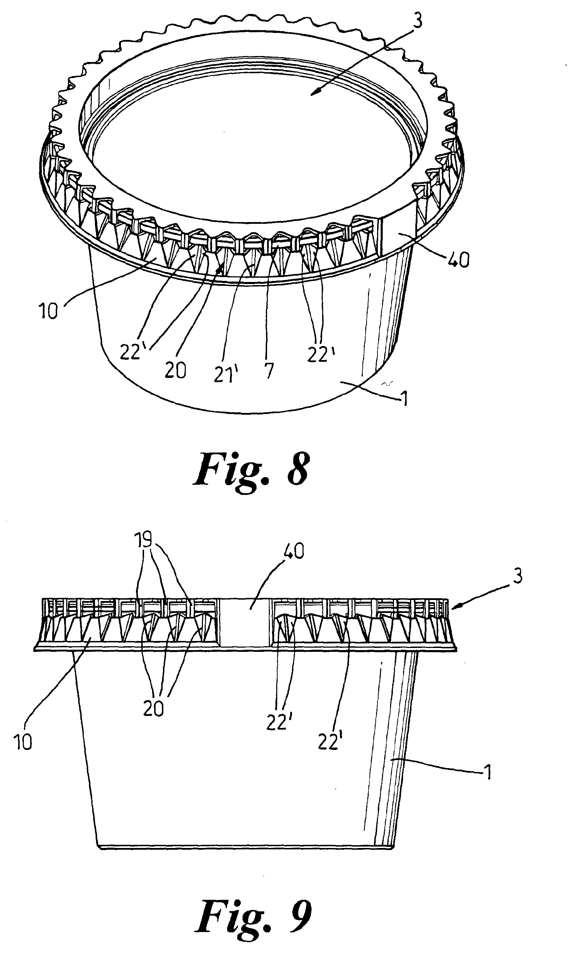

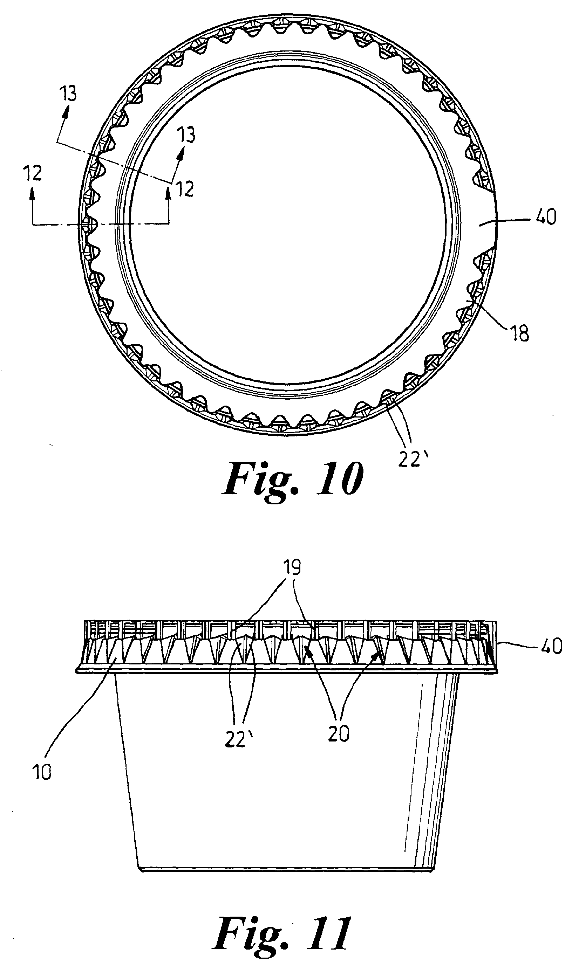

By suitable modification of the break lines 32, 32', by omitting tab 31 and reducing the size of tab 40, it can be arranged, as in the embodiment of Figures 8 to 13, that the skirt 10 and depending members remain on the tub after initial opening of the lid, by prizing tab 40 from skirt 10 and pulling on tab 40.

The te nature of the lid is provided by the fact that tab 40 once released from skirt 10 will project from the skirt 10.

Figures 8 to 13 show a second embodiment which differs from the embodiment of Figures 1 to 7 principally in the modified configuration of the latching formations 20.

In Figures 8 to 13 parts corresponding to those of the embodiment of Figures 1 to 7 have been given corresponding reference numerals.

It will be seen from Figure 8 that the latching formations 20 are each defined by a pair of triangular walls 22' which have a common edge 21' that is inclined upwardly and inwardly of the lid 3, so as to be roughly of beak shape.

In effect, by comparison with the construction of Figure 2, the latch walls 21 of Figure 2 are replaced by the inclined edge 21' and the vertical wall elements 17 of Figure 2 are omitted, the bridges 19 being of reduced height in the second embodiment.

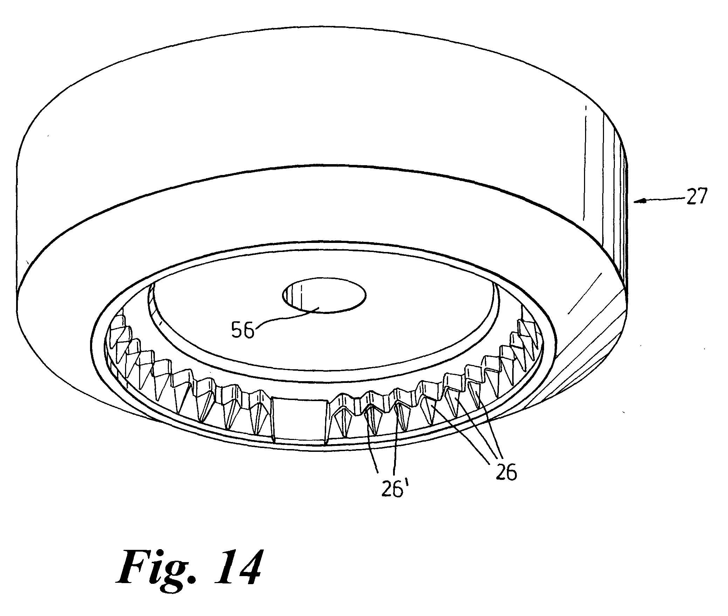

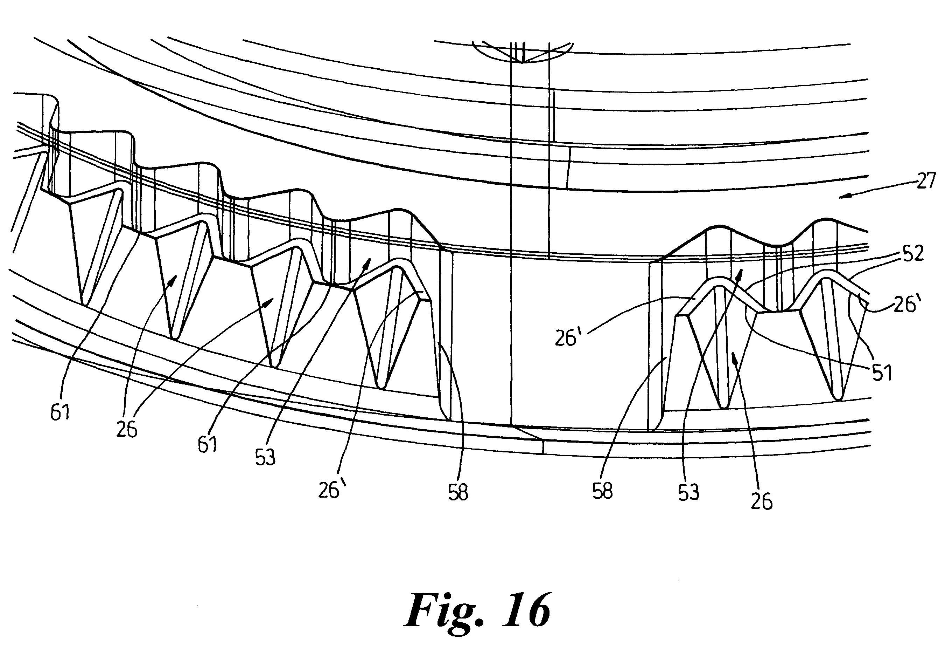

It will be appreciated that the latching formations 20 of the second embodiment of Figures 8 to 13 are formed in a similar manner to those of the first embodiment of Figure 1 to 7, the tool portions 27 (Figure 7) being suitably modified, as shown in figures 14 and 16 described below.

In the second embodiment reduced-thickness tear formations 30' are provided to enable the body 9 of the lid to be removed from the tub 1 by firm pulling on tab 40, the skirt 10 being left on the tub 1.

As shown in Figures 14 and 16, the upper tool 27 of a two-part tool assembly is provided with a plurality of circumferentially spaced-apart forming noses 26 each of which is surmounted by a respective abutment-forming shoulder 26' of V-shape in underplan view. The shoulders 26' are each bounded in Figure 16 by a first line 51 at the junction between nose 26 and the shoulder 26', and a second line 52 at the junction between an interrupted frieze 53 of internal gear-teeth form, and the shoulder 26'.

Importantly, the line 52 extending along the radially inner, lower margin of each element of the frieze 53 is in the form of a V-shaped cutting edge that acts, in conjunction with a matched cutting edge 54 on the lower tool, to produce the respective cut-outs in the sheet material.

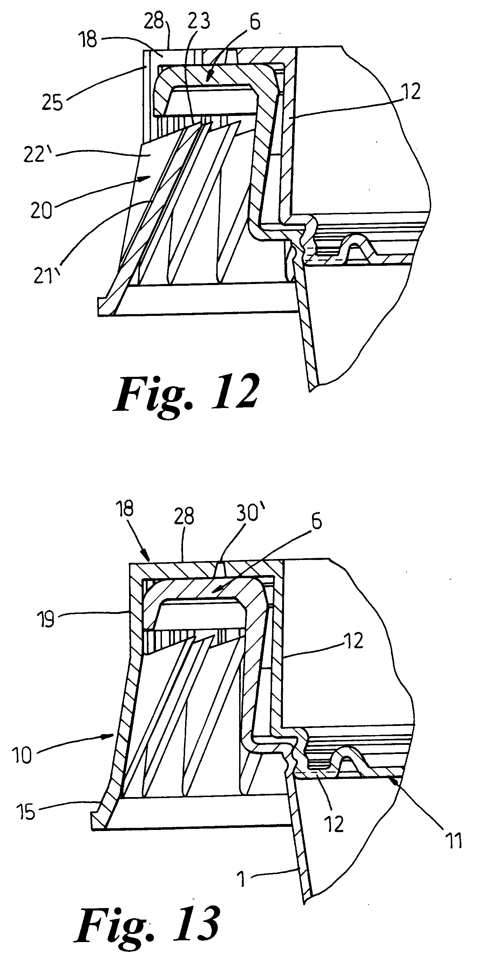

The depth of the frieze 53 determines the vertical distance of the latch abutments 23 below the closure body margin 18. In order to provide the latch abutments 23 with an inclined face, as seen in Figure 12, to provide an enhanced latch grip, the tool surfaces 26' are part of a frusto-conical surface of large cone angle.

The lower tool part 50 is provided with a series of circumferentially-spaced recesses 55 of complementary shape to that of the noses 26, but of larger dimensions to take account of the required thickness of the latch walls 22'. The recesses 55 are surmounted by a frieze 60 of complementary shape to that of frieze 53 of the upper tool part 27, the upper edge 54 of the frieze providing the matched cutting edge for cooperation with edge 52 on the upper tool part 27.

It will be seen from Figure 16 that the cutting edges 52 are discontinuous in the narrow regions 61 intermediate the radially inwardly-directed teeth of the frieze 53 in order to create the bridges 19.

The upper and lower tool parts 27, 50 are provided with ports 56, 57 respectively for connection to suitable pressure/vacuum sources to assist in thermo-forming of the sheet material.

The upper tool part 27 is provided with additional circumferentially-spaced blades 58 to provide weakened lines in the lid to define the vertical sides of tab 40.

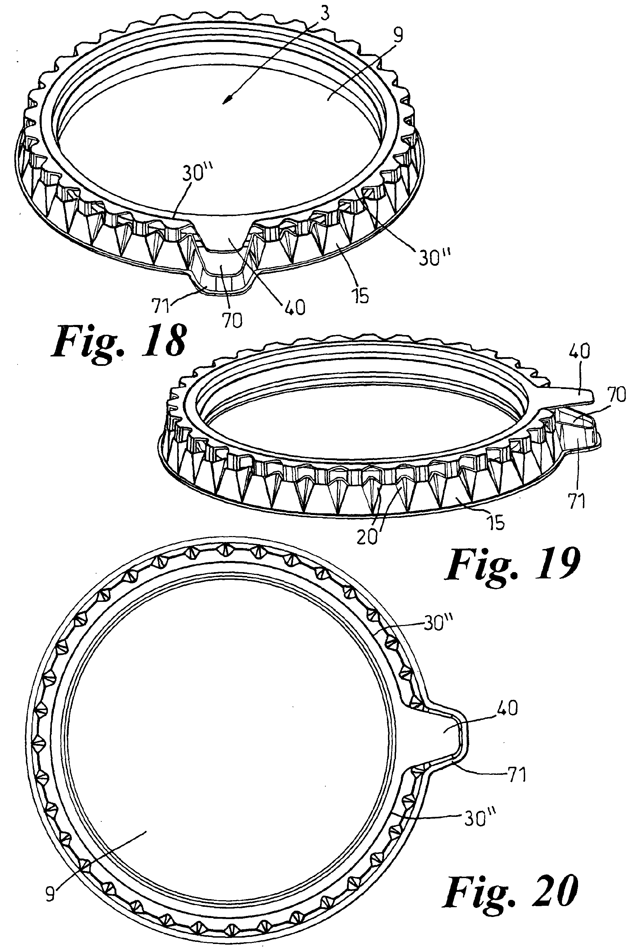

Figures 18 to 20 show a modification to the closure of Figure 8 which differs principally in the configuration of the pull tab 40. In the construction of Figures 18 to 20 the pull tab 40, in the as-formed condition shown, is directed horizontally outwards from the closure body 9 and lies substantially in register with an upwardly-facing aperture 70 defined by an outward bulge 71 of skirt 15.

Bulge 71 is of similar depth to the remainder of skirt 15 and accordingly retains the integrity of the skirt when the tab 40 has been pulled to initiate separation of the closure body 9 from the remainder of the closure along the line of weakness 30".

It will be appreciated from what has been previously discussed in relation to the forming of the latching formations 20, that the tab 40 and skirt bulge 71 can be formed from sheet material by the provision of suitable cutting edges and forming surfaces on the axially movable tools.

Whilst the invention is of particular value in relation to tamper-evident closures, it should be appreciated that the latch formation disclosed can be employed with permanent closures, those that do not have a frangible connection for separating a removable closure body.

## Claims

1. A closure (3) for a container (1), the container having a mouth (16) surrounded by an external flange (7) extending generally away from the mouth, the closure comprising a closure body (9) adapted to extend across the mouth, a skirt (15) which is disposed below the level of the container flange when the closure is initially secured to the container and the mouth is uppermost, **characterised in that** the skirt is connected to the margin of the body by a plurality of spaced-apart bridges (19) which lie adjacent to the outer margin of the flange in the initially secured condition of the closure, and by a plurality of upwardly-facing latching formations (20) depending from the skirt (15) and each disposed circumferentially between adjacent bridges (19) as viewed in plan and adapted to latch under the flange (7), the upper portion (23) of the latching formations each lying vertically beneath a respective tool access aperture (25) provided in the margin of the closure body.

2. A closure as claimed in claim 1 in which the tool access apertures (25) are completely open.

3. A closure as claimed in claim 1 or claim 2 in which each latching formation comprises a latch wall (21) supported on the skirt (15) in an inclined position by a pair of substantially triangular fillets (22) connected to opposite side edges of the latch wall, the latch wall being of substantially trapezoidal shape.

4. A closure as claimed in claim 1 or claim 2 in which each latching formation is defined by a pair of triangular latch walls (22') having a common edge (21') which is inclined inwardly and upwardly of the closure.

5. A closure as claimed in any one of the preceding claims in which the closure has been produced from a flat sheet of plastics material by thermo-forming, said upper portion (23) of the latching formations having been formed from the material that occupied the tool access apertures in the sheet material.

6. A closure as claimed in any one of the preceding claims in which the central portion (11, 12) of the closure body is shaped to have a plug-fit with the container, and the closure body is detachably connected to the skirt by frangible connections (29; 30") which have to be broken on or prior to initial removal of the closure body from the container.

7. A closure as claimed in claim 6 in which the frangible connections are defined by a plurality of slits (30) which are positioned in the margin of the closure body between the tool access apertures.

8. A closure as claimed in claim 7, in which the tool access apertures (25) are of substantially trapezoidal shape as viewed in plan, the slits (30) extending substantially lengthwise of said margin.

9. A closure as claimed in claim 6 or claim 7 in which the skirt is provided with a pull-tab (31) and with a weakened region (32) adjacent to the pull-tab, to enable the skirt to be broken on firm pulling of the pull-tab, and then the skirt and bridges to be peeled away from the container, the peeling action breaking the frangible connections in the margin of the closure body.

10. A closure as claimed in claim 6 or claim 7 in which the closure is so arranged that the skirt remains on the container after initial opening of the closure.

11. A closure as claimed in claim 10 which comprises a pull-tab (40) which is fast with the central portion of the closure body, the skirt being left substantially intact after operation of the pull-tab.

12. A method of forming a latch formation during thermo-forming of a closure as claimed in claim 5, comprising creating a tool access aperture in the margin of the closure body, and causing a tool projection (26) to extend axially through the tool access aperture (25) in the direction normal to the plane of the closure body, the tool projection being shaped to assist in deforming the sheet material to provide an inclined latching formation, and relatively separating the tool projection and closure body by relative axial movement apart.

13. A method as claimed in claim 12 in which the tool projection comprises a narrow shoulder (26') which provides a forming surface to define the upper margin (23) of the upper portion of the latch formation in the closed condition of the tools.

14. A method as claimed in claim 13 in which the tool shoulder is bounded by a cutting edge (52) of the tool projection that creates the respective tool access aperture.

15. A method as claimed in claim 14 in which in order to provide a cutting action the other tool (50) of the tool assembly is provided with a complementary cutting edge (54) to that of said cutting edge (52).

16. A method as claimed in any one of claims 12 to 15 in which the inclined walls (22') of the latching formation are thermo-formed from sheet material between complementary tool formations on a two-part tool assembly (27, 50).
